# EUROPEAN PATENT SPECIFICATION

(11) **EP 4 169 787 B1**
(45) Date of publication and mention of the grant of the patent: **19.11.2025**
(21) Application number: 20941120.6
(22) Date of filing: 17.06.2020
(51) Int. Cl.: B60W 30/095, B60W 30/09, B60W 30/14, B60W 40/04

(54) **TRAVEL ASSISTANCE METHOD AND TRAVEL ASSISTANCE DEVICE**
FAHRASSISTENZVERFAHREN UND FAHRASSISTENZVORRICHTUNG
PROCÉDÉ D'AIDE AU DÉPLACEMENT ET DISPOSITIF D'AIDE AU DÉPLACEMENT

(43) Date of publication of application: 26.04.2023
(73) Proprietor: NISSAN MOTOR CO., LTD., Kanagawa 221-0023 (JP); RENAULT s.a.s., 92100 Boulogne-Billancourt (FR)
(72) Inventor: HIRAMATSU, Machiko, Atsugi-shi, Kanagawa 243-0123 (JP); TAKADA, Yuji, Atsugi-shi, Kanagawa 243-0123 (JP)
(74) Representative: Grünecker Patent- und Rechtsanwälte PartG mbB
(86) International application number: PCT/IB2020/000547
(87) International publication number: WO 2021/255488

(56) References cited:
- EP-A1- 3 162 648
- WO-A1-2016/027349
- WO-A1-2018/193535
- WO-A1-2018/220807
- JP-A- 2016 038 837
- JP-A- 2019 034 627
- US-A1- 2015 039 156
- US-A1- 2019 283 752

## Description

### TECHNICAL FIELD

The present invention relates to a travel assistance method and a travel assistance device.

### BACKGROUND ART

In recent years, a system that detects an obstacle present on a travel route of a host vehicle and assists traveling of the host vehicle according to a state of the obstacle has been studied. For example, JP 2018-536539 A discloses a vehicle control method for detecting an object such as a parked vehicle or a pedestrian present on a road shoulder of a travel lane of a host vehicle and lowering an upper limit value of a vehicle speed according to a relative speed of the object. US 2019/283752 A1 relates to a vehicle control device and a vehicle control method. EP 3 162 648 A1 relates to a vehicle control apparatus. US 2015/039156 A1 relates to a vehicle travel control apparatus.

### SUMMARY OF INVENTION

According to the technique disclosed in JP 2018-536539 A, it is possible to perform travel assistance in accordance with an obstacle present in a travel lane of a host vehicle. However, when an obstacle is present in an adjacent lane adjacent to the travel lane of the host vehicle, it is not possible to perform travel assistance in accordance with such an obstacle.

An object of the present invention is to perform travel assistance in consideration of an obstacle when the obstacle is present in an adjacent lane adjacent to a travel lane of a host vehicle.

According to one aspect of the present invention a travel assistance method is provided as set forth in claim 1.

According to a second aspect of the present invention, a travel assistance device is provided as set forth in claim 10.

### BRIEF DESCRIPTION OF DRAWINGS

[FIG. 1] FIG. 1 is a schematic configuration diagram of a travel assistance device common to embodiments.
[FIG. 2] FIG. 2 is a diagram showing a situation around a host vehicle in a case where travel assistance control according to a first embodiment is performed.
[FIG. 3] FIG. 3 is a flowchart showing the travel assistance control.
[FIG. 4] FIG. 4 is a diagram showing a situation around a host vehicle in a case where travel assistance control according to a second embodiment is performed.
[FIG. 5] FIG. 5 is a diagram showing a situation around a host vehicle in a case where travel assistance control according to a third embodiment is performed.
[FIG. 6] FIG. 6 is a diagram showing a situation around a host vehicle according to another embodiment.
[FIG. 7] FIG. 7 is a flowchart showing travel assistance control according to a fourth embodiment.
[FIG. 8] FIG. 8 is a flowchart showing travel assistance control according to a fifth embodiment.
[FIG. 9] FIG. 9 is a diagram showing a situation around a host vehicle in a case where travel assistance control according to a sixth embodiment is performed.

Embodiments one to five refer to cases in which no median strip between the travel lane of the host vehicle and an adjacent lane in which an obstacle exists is detected, whereas the sixth embodiment refers to the case where a median strip is detected.

### DESCRIPTION OF EMBODIMENTS

Hereinafter, embodiments of the present invention will be described with reference to the drawings and the like.

### (First Embodiment)

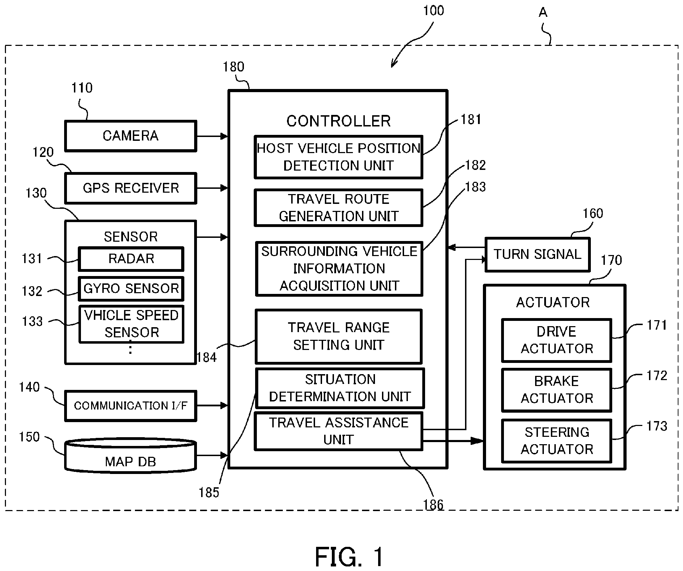

FIG. 1 is a schematic configuration diagram of a driving assistance device 100 common to the embodiments of the present invention. As shown in the figure, the driving assistance device 100 includes a camera 110, a GPS receiver 120, a sensor 130, a communication interface 140, a map database 150, a turn signal (direction indicator) 160, an actuator 170, and a controller 180. The driving assistance device 100 is mounted on, for example, a vehicle (a host vehicle A) having an autonomous driving function or a driving assistance function.

The camera 110 is an imaging device that images an external situation of the host vehicle A, and acquires imaging information on the external situation of the host vehicle A. The camera 110 is, for example, around view monitor cameras provided on vehicle exterior sides of front, rear, and left and right doors of the host vehicle A, a front camera provided on a vehicle exterior or interior side of a windshield, and a rear camera provided on a rear of the host vehicle A. The camera 110 outputs the imaging information on the external situation to a controller 180.

The GPS receiver 120 periodically receives a signal (GPS data) transmitted from a GPS satellite. The GPS receiver 120 outputs the received GPS data to the controller 180.

The sensor 130 includes a radar 131, a gyro sensor 132, a vehicle speed sensor 133, and the like, and detects a travel state of the host vehicle A and a state of an object present around the host vehicle A. The radar 131 detects an object outside the host vehicle A using radio waves. The radio waves are, for example, millimeter waves, and the radar 131 transmits the radio waves to surroundings of the host vehicle A and receives radio waves reflected by an object to detect the object. The radar 131 can acquire, for example, a distance or a direction to a surrounding object as object information. The gyro sensor 132 detects a direction of the host vehicle A. The vehicle speed sensor 133 detects a vehicle speed of the host vehicle A. The sensor 130 outputs the acquired object information and the detected direction and vehicle speed of the host vehicle A to the controller 180.

The communication interface 140 acquires a surrounding situation of the host vehicle A from an outside by wireless communication. The communication interface 140 receives various types of information from an intelligent transport system (ITS) that transmits, for example, traffic information such as traffic jam information and traffic regulation information, weather information, and the like in real time. The ITS includes vehicle-to-vehicle communication with another vehicle, road-to-vehicle communication with a roadside device, and the like. The communication interface 140 acquires, for example, acceleration and deceleration of another vehicle around the host vehicle A, a relative position with respect to the host vehicle A, and the like by the vehicle-to-vehicle communication.

The map database 150 stores map information. The map information includes information on a shape including a curvature of a curve, a gradient, a width, a speed limit, an intersection, a traffic light, the number of lanes, and the like of a road. The map information stored in the map database 150 can be referred to at any time by the controller 180 to be described later.

The turn signal 160 is operated and stopped by an operation of a driver or a command from the controller 180. Operation and stop information of the turn signal 160 is output to the controller 180.

The actuator 170 is a device that executes traveling control of the host vehicle A based on a command from the controller 180. The actuator 170 includes a drive actuator 171, a brake actuator 172, a steering actuator 173, and the like.

The drive actuator 171 is a device for adjusting a drive force of the host vehicle A. When the host vehicle A is a vehicle equipped with an engine as a traveling drive source, the drive actuator 171 includes a throttle actuator that adjusts an amount of air supplied to the engine (a throttle opening) and a fuel injection valve that adjusts an amount of fuel supplied to the engine (a fuel injection amount).

When the host vehicle A is a hybrid vehicle or an electric vehicle equipped with a motor as a traveling drive source, the drive actuator 171 includes a circuit (an inverter, a converter, and the like) capable of adjusting electric power supplied to the motor.

The brake actuator 172 is a device that operates a brake system in response to a command from the controller 180 and adjusts a braking force applied to wheels of the host vehicle A. The brake actuator 172 includes a hydraulic brake or a regenerative brake.

The steering actuator 173 includes an assistance motor that controls a steering torque in an electric power steering system, or the like. The controller 180 can control an operation of the steering actuator 173 to control a steering angle of the wheels.

The controller 180 is constituted with a computer including a central processing unit (CPU), a read-only memory (ROM), a random-access memory (RAM), and an input/output interface (an I/O interface). The controller 180 executes processing for implementing specific control by executing a specific program. The controller 180 may include one computer or a plurality of computers.

The controller 180 generates travel assistance information indicating a travel route (including a steering timing) to a destination, a traveling vehicle speed (including acceleration and deceleration) on the route, and the like using destination information, the map information, and the like, and assists traveling of the host vehicle A according to the route and the vehicle speed indicated by the generated travel assistance information.

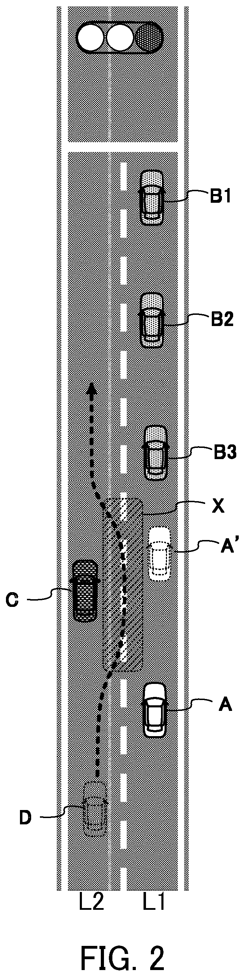

FIG. 2 is a diagram showing a situation around the host vehicle A in a case where travel assistance control according to the present embodiment is performed. In this figure, two lanes of a passing lane L1 on a right side and a travel lane L2 adjacent to a left side of the passing lane L1 are shown. In this example, in a case where left-hand traffic is required by law or the like, it is assumed that a passing lane is on the right side and a travel lane is on the left side. It is assumed that traveling directions of these lanes L1 and L2 are both from a lower side to an upper side, and a signal in front is a stop display (red).

In the passing lane L1, the host vehicle A is traveling, and in front of the host vehicle A, three preceding vehicles B1 to B3 have stopped before a stop line and are forming a row.

In the travel lane L2 on the left side of the figure, a parked vehicle C is stopped on the left side (closer to a road shoulder) of the lane L2 and at the left rear of the preceding vehicle B3 located at the tail end of the preceding vehicles B1 to B3 existing in the passing lane L1. Another vehicle D traveling to the parked vehicle C is present behind the parked vehicle C. The parked vehicle C is an example of an obstacle, and other than the parked vehicle C, a stationary object such as a construction site or a traveling object at a predetermined speed or less such as a pedestrian or a bicycle may be an obstacle. In the following description, it is assumed that an obstacle is the parked vehicle C.

Here, a planned travel route of another vehicle D is indicated by a dotted line. According to the planned travel route, the other vehicle D travels on an avoidance route that temporarily shifts to a side of the parked vehicle C in order to avoid the parked vehicle C. Specifically, the other vehicle D traveling in the travel lane L2 enters the passing lane L1 beyond a center line behind the parked vehicle C, passes by the side of the parked vehicle C, and then returns to the travel lane L2 again to continue traveling.

Therefore, in a travel assistance method according to the present embodiment, when the host vehicle A detects the parked vehicle C in the adjacent lane L2, the controller 180 predicts a travel route of the other vehicle D that avoids the parked vehicle C. The controller 180 sets a travel range X in which the other vehicle D can travel on the side of the parked vehicle C on the lane L1 side. In this figure, the travel range X is provided so as to have a predetermined range length in a front-rear direction and a predetermined range width in a width direction around the side of the parked vehicle C. In this figure, the range length is larger than an entire length of the parked vehicle C.

The controller 180 performs travel assistance such that the host vehicle A traveling toward the stopped preceding vehicle B3 does not stop at a position including the travel range X. For example, in this figure, the travel route is changed such that the host vehicle A stops at a position A' on a side of the travel range X and opposite to the parked vehicle C. In this way, the stopped host vehicle A' does not obstruct the traveling of the other vehicle D traveling on the side of the parked vehicle C in order to avoid the parked vehicle C.

Referring again to FIG. 1, the controller 180 that performs such control includes functional units that execute various control processes, such as a host vehicle position detection unit 181, a travel assistance information generation unit 182, a surrounding vehicle information acquisition unit 183, a travel range setting unit 184, a situation determination unit 185, and a travel assistance unit 186. Hereinafter, these configurations will be described in detail.

The host vehicle position detection unit 181 constantly detects a current position, vehicle speed, and advancing direction of the host vehicle A based on the GPS data from the GPS receiver 120, the direction of the host vehicle A detected by the sensor 130, and vehicle speed. The host vehicle position detection unit 181 detects a position of the host vehicle A on a map with reference to the map database 150.

The host vehicle position detection unit 181 acquires road information on a road around the host vehicle A based on the detected current position, vehicle speed, advancing direction, and position on the map of the host vehicle A, the imaging information on the external situation acquired by the camera 110, and the object information acquired by the sensor 130. The road information includes information on a shape, a gradient, a width, a speed limit, an intersection, a traffic light, a type of lane, the number of lanes, and the like of the road around the host vehicle A.

The travel assistance information generation unit 182 generates a travel route of the host vehicle A based on information such as the position or surrounding road situation of the host vehicle A detected by the host vehicle position detection unit 181 and a set destination. Further, the travel assistance information generation unit 182 generates speed information (including acceleration and deceleration, the steering timing, and the like) in a case where the host vehicle A travels along the travel route. Travel assistance information is generated based on the travel route and the speed information generated in this way, and the traveling of the host vehicle A is assisted based on the travel assistance information.

The surrounding vehicle information acquisition unit 183 acquires surrounding vehicle information based on the imaging information on the external situation acquired by the camera 110, the object information acquired by the sensor 130, and the surrounding situation of the host vehicle A acquired by the communication interface 140. The surrounding vehicle information includes a traveling situation of a vehicle traveling in an opposite lane of the host vehicle A.

The surrounding vehicle information acquisition unit 183 uses the acquired surrounding vehicle information to detect the display of the signal in front of the lane L1, a traveling situation of a preceding vehicle B, an obstacle in the adjacent lane L2, presence or absence of the other vehicle D, a travel state of the other vehicle D, and the like. The obstacle may be a stationary object such as the parked vehicle C or a construction site, or may be an object that travels at a predetermined speed or less, such as a pedestrian or a bicycle.

The travel range setting unit 184 obtains a travel route on which the other vehicle D travels while avoiding the detected obstacle in the adjacent lane L2 of the host vehicle A, and sets the travel range X on the side of the obstacle. Even when the other vehicle D is not actually detected, the travel range setting unit 184 sets the travel range X on the side of the obstacle on the assumption that the other vehicle D approaches the parked vehicle C from a rear side of the parked vehicle C.

As an example, a range length of the travel range X in the front-rear direction and a range width of the travel range X in a vehicle width direction are determined as follows. In general, when the other vehicle D travels while avoiding an obstacle, it is known that an avoidance time of about 5 to 10 seconds is required from the start of steering toward the side of the obstacle to the return to the lane L2 again. Another vehicle D reduces the vehicle speed while avoiding the obstacle. Therefore, the travel range X is set on the side of the obstacle to have a predetermined range length around the obstacle in the front-rear direction and to have a predetermined vehicle width direction in the vehicle width direction. As the range length, for example, a distance at which the other vehicle D is predicted to decelerate and travel in half of the avoidance time is set. As the range width, a length obtained by adding a margin to the vehicle width of the other vehicle D is set. In this way, the travel range X is determined according to a travel state of the other vehicle D. When the other vehicle D is not detected, the travel range X may be set based on information such as a shape of the lane L2 and a legal speed.

The situation determination unit 185 determines a traveling situation of the host vehicle A. For example, when it is predicted that the preceding vehicle B3 immediately before the host vehicle A stops, and when travel assistance is performed using the travel assistance information generated by the travel assistance information generation unit 182, the situation determination unit 185 determines whether the host vehicle A is present in the travel range X for a predetermined threshold time or more. In the following description, the fact that the host vehicle A is present in the travel range X for a predetermined threshold time or more is referred to as "stay".

When it is determined that the host vehicle A stays in the travel range X, the situation determination unit 185 changes the travel assistance information and controls the host vehicle A so as not to stay in the travel range X. In this way, the host vehicle A does not stop in the travel range X, and the other vehicle D can travel in the travel range X to avoid an obstacle, and thus the host vehicle A is suppressed from obstructing the traveling of the other vehicle D.

The travel assistance unit 186 performs travel assistance of the host vehicle A. When the travel assistance information is changed by the situation determination unit 185, the travel assistance unit 186 performs the travel assistance of the host vehicle A based on the changed travel assistance information. The travel assistance unit 186 may not only operate the host vehicle A according to the travel assistance information indicating route information and the speed information, but also may provide the travel assistance information to the driver by displaying an icon on a display of the host vehicle A and transmitting a voice message. Therefore, in a case where an automated driving level is low or the like, the travel assistance control according to the present embodiment can be implemented by display.

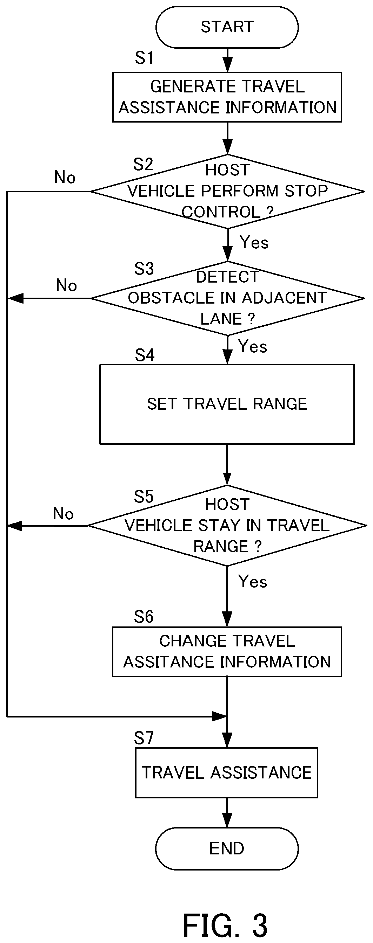

FIG. 3 is a flowchart of the travel assistance control executed by the controller 180. The travel assistance control is repeatedly executed at a predetermined cycle. The travel assistance control may be performed by executing a program stored in the controller 180.

In step S1, the controller 180 (the travel assistance information generation unit 182) determines a travel route and a speed information of the host vehicle A based on a position of the host vehicle A detected by the host vehicle position detection unit 181, information such as the set destination, and the like. Accordingly, the travel assistance information is generated.

In step S2, the controller 180 (the surrounding vehicle information acquisition unit 183) predicts a travel state of the preceding vehicle B3 immediately before the host vehicle A in accordance with a stop signal or the like in front of the host vehicle A, and determines whether the host vehicle A performs stop control. When the host vehicle A performs the stop control (S2: Yes), processing of step S3 is performed next. When the host vehicle A does not perform the stop control (S2: No), travel assistance using the travel assistance information generated in step S1 is performed in processing of step S7 next.

In step S3, the controller 180 (the surrounding vehicle information acquisition unit 183) detects, as an obstacle, an object that moves at a predetermined speed or less or is stopped in the adjacent lane L2 of the host vehicle A. When an obstacle is detected (S3: Yes), processing of step S4 is performed next. When the obstacle is not detected (S3: No), the travel assistance control is performed in the processing of step S7 next.

In step S4, the controller 180 (the travel range setting unit 184) predicts a meandering route on which the other vehicle D traveling behind the obstacle in the adjacent lane travels while avoiding the obstacle, and sets a travel range X in which the other vehicle D can travel on the side of the obstacle. Even when the other vehicle D is not present, the travel range X is set on the assumption that the other vehicle D is present behind the obstacle.

In step S5, when the travel assistance information generated by the travel assistance information generation unit 182 is used, the controller 180 (the situation determination unit 185) determines whether the host vehicle A is present, that is, stays in the travel range X set by the travel range setting unit 184 for a predetermined time or more. When the host vehicle A stays in the travel range X (S5: Yes), processing of step S6 is performed next in order to change the travel assistance information. On the other hand, when the host vehicle A does not stay in the travel range X for the predetermined time or more (S5: No), the processing of step S7 is performed next.

In the processing of step S6, the controller 180 (the situation determination unit 185) changes the travel assistance information such that the host vehicle A is absent in the travel range X for the predetermined time or more. For example, the travel route is changed such that the host vehicle A is stopped before the travel range X and is stopped in front of or on the side of the travel range X if there is a space. When it is predicted that the preceding vehicle B3 in front is restarted immediately, the host vehicle A may be decelerated until the preceding vehicle B3 is restarted.

In step S7, the controller 180 (the travel assistance unit 186) assists the traveling of the host vehicle A according to the travel assistance information. When the travel assistance information is changed in step S6, travel assistance is performed based on the changed travel assistance information. As a result, since the host vehicle A does not stay in the travel range X, the host vehicle A is suppressed from obstructing the traveling of the other vehicle D traveling in the adjacent lane L2 so as to avoid the obstacle.

In processing of step S2, the controller 180 (the surrounding vehicle information acquisition unit 183) determines whether the host vehicle A is performing the stop control, but the controller 180 is not limited thereto. For example, the controller 180 may determine whether the host vehicle A is decelerating or is moving slowly at a predetermined speed or less. According to such determination, when the host vehicle A is decelerating or moving slowly, it is possible to determine whether the host vehicle A is present in the travel range X for the predetermined time in a subsequent step S5.

In step S5, the controller 180 (the situation determination unit 185) determines whether the host vehicle A is present in the travel range X set by the travel range setting unit 184 for the predetermined time or more, that is, determines whether the host vehicle A stays in the travel range X, but the controller 180 is not limited thereto. The controller 180 may determine whether the host vehicle A is stopped in the travel range X, and by using such determination control, the host vehicle A is suppressed from stopping in the travel range X and obstructing advancing of the other vehicle D. The controller 180 may determine whether the host vehicle A obstructs the advancing of the other vehicle D in the travel range X, without being limited to the determination of whether the host vehicle A stays or stops in the travel range X, and it is possible to suppress the host vehicle A from obstructing the advancing of the other vehicle D by this determination control.

In the processing of step S6, the controller 180 (the situation determination unit 185) changes the travel assistance information, but the controller 180 is not limited thereto. For example, in a case where the travel assistance information is set at a predetermined interval, the travel assistance information is not changed, and is set at a predetermined cycle such that the host vehicle A is absent in the travel range X for the predetermined time.

The travel assistance control in steps S1 to S7 is also performed when the other vehicle D does not travel in the adjacent lane L2. That is, when an obstacle is detected in the adjacent lane L2, the controller 180 sets the travel range X on the assumption that the other vehicle D is traveling even if the other vehicle D is not detected behind the obstacle. In this way, it is possible to suppress the other vehicle D from obstructing the traveling of the other vehicle D in the adjacent lane.

According to the first embodiment, the following effects can be obtained.

According to the travel assistance method of the first embodiment, the obstacle is detected in the adjacent lane L2 of the host vehicle A (S3: Yes), the travel range X on the travel lane L1 side of the host vehicle A in which the other vehicle D traveling toward the obstacle in the adjacent lane L2 can travel while avoiding the obstacle is set on the side of the obstacle (S4), it is determined whether the host vehicle A obstructs the advancing of the other vehicle D in the travel range X (S5), the route and the vehicle speed are set so as not to obstruct the advancing (S6) when the advancing is obstructed (S5: Yes), and the travel assistance is executed using the set route and vehicle speed (S7).

Here, in a state in which the host vehicle A stays in the travel range X on the side of the obstacle, since an advancing route of the other vehicle D is blocked by the host vehicle A, the other vehicle D traveling toward the obstacle in the adjacent lane L2 cannot travel on the side of the obstacle to avoid the obstacle. However, the host vehicle A does not obstruct the traveling of the other vehicle D in the travel range X by the travel assistance control of the present embodiment. As a result, it is possible to avoid occurrence of congestion due to the other vehicle D traveling toward the parked vehicle C, which may potentially occur.

If the host vehicle A and the other vehicle D stop on the side of the parked vehicle C, the congestion may occur. In such a state, when an emergency vehicle travels toward the parked vehicle C in the adjacent lane, the host vehicle A and the other vehicle D need to move so that the emergency vehicle can travel, but it takes time to perform such movement automatically or manually. In the present embodiment, since the congestion is suppressed without obstructing the traveling of the other vehicle D on the side of the obstacle, the emergency vehicle can travel on the side of the parked vehicle C. Further, since the other vehicle D can travel while avoiding the parked vehicle C, it is possible to improve fuel efficiency.

According to the travel assistance method of the first embodiment, more specifically, it is determined whether the host vehicle A stays in the travel range X for the predetermined time or more (S5), the route and the vehicle speed are set such that the host vehicle A is absent in the travel range X (S6) when the host vehicle A stays in the travel range X for the predetermined time or more, and the travel assistance is executed using the changed route and vehicle speed (S7). In this way, since the host vehicle A does not stay in the travel region X for the predetermined time or more, the other vehicle D can travel in the travel region X in order to avoid an obstacle. As a result, it is possible to suppress the host vehicle A from obstructing the traveling of the other vehicle D in the travel region X.

According to the travel assistance method of the first embodiment, the route is changed such that the host vehicle A stops outside the travel range X. By setting a stop position of the host vehicle A outside the travel region X in this way, the host vehicle A is suppressed from obstructing the traveling of the other vehicle D in the travel region X. It is preferable that such the travel assistance is performed when it is predicted that the host vehicle A is present in the travel range X for a relatively long time. When the host vehicle A stays in the travel range X for a long time, even if the vehicle speed is changed, it may be difficult to sufficiently reduce a presence time of the host vehicle A in the travel range X. Therefore, by changing the route such that the host vehicle A stops outside the travel range X, it is possible to suppress the host vehicle A from staying in the travel range X and to suppress the host vehicle A from obstructing the traveling of the other vehicle D.

When a lane width is wide and a stop space of the host vehicle A is present on the side of the travel range X in the lane L1, the route is changed such that the host vehicle A stops on the side of the travel range X. By this control, the host vehicle A stops outside the travel range X, and a vehicle queue under congestion that may occur behind the travel lane of the host vehicle A can be made shorter than in a case where the host vehicle A stops before the travel range X.

According to the travel assistance method of the first embodiment, the speed is changed such that the host vehicle A does not stop in the travel range X. It is preferable that such the travel assistance is performed when it is predicted that the host vehicle A is present in the travel range X for a relatively short time. When a time during which the host vehicle A is present in the travel range X is longer than a threshold time but is relatively short, there is a possibility that staying in the travel range X can be suppressed by changing the vehicle speed without changing the travel route. For example, when the preceding vehicle B3 is about to restart, the host vehicle A may be decelerated without being stopped, and the host vehicle A may travel in the travel range X until the vehicle restarts. If the restart of the preceding vehicle B3 is confirmed, the host vehicle A may be accelerated again. In this way, since the stop and restart of the host vehicle A is reduced, it is possible to prevent occurrence of shaking in the front-rear direction.

### (Modification)

In the first embodiment, the example in which the travel range X is set according to the travel state of the other vehicle D has been described. In the present modification, an example in which the range length of the travel range X in the front-rear direction and the range width of the travel range X in the vehicle width direction are changed due to other factors will be described.

As a first example, as the speed of the other vehicle D increases, the range length and the range width of the travel range X are set to be larger. As the speed of the other vehicle D increases, a speed of the other vehicle D when avoiding the obstacle increases. Therefore, since a travel distance in a predetermined number of seconds increases, it is necessary to increase the range length. Further, since it is necessary to increase a margin in the vehicle width direction, it is necessary to increase the range width. In this way, by increasing the range length and the range width as the speed of the other vehicle D becomes higher, it is possible to suppress the host vehicle A from obstructing the traveling of the other vehicle D on the side of the obstacle. When the speed of the other vehicle D increases, it is possible to reduce a possibility that the host vehicle A obstructs the traveling of the other vehicle D by changing only one of the range length and the range width.

As a second example, as vehicle widths of the lanes L1 and L2 are smaller, the range length and the range width of the travel range X are set to be larger. As the vehicle width is smaller, it is necessary to increase the margin in the vehicle width direction when the other vehicle D avoids an obstacle. In this way, as the vehicle widths of the lanes L1 and L2 are smaller, the range width of the travel range X in which the other vehicle D can travel on the side of the obstacle is set to be larger, and thus it is possible to suppress the host vehicle A from obstructing the traveling of the other vehicle D on the side of the obstacle.

As a third example, as the obstacle is larger, the range length and the range width of the travel range X are set to be larger. When a size of the obstacle is larger, an avoidance route of the obstacle of the other vehicle D becomes longer, and thus the range length and the range width of the travel range X are increased. In this way, since a sufficiently large region is set as the travel range X on the side of the obstacle, it is possible to suppress the host vehicle A from obstructing the traveling of the other vehicle D when the other vehicle D travels while avoiding a relatively large obstacle. When the obstacle is larger, it is possible to reduce a possibility that the host vehicle A obstructs the traveling of the other vehicle D by changing only one of the range length and the range width.

### (Second Embodiment)

In the first embodiment, the example in which the adjacent lane L2 in which the parked vehicle C is detected is in the same advancing direction as the travel lane L1 of the host vehicle A has been described. In the second embodiment, an example in which the adjacent lane L2 is an opposite lane to the travel lane L1 of the host vehicle A will be described.

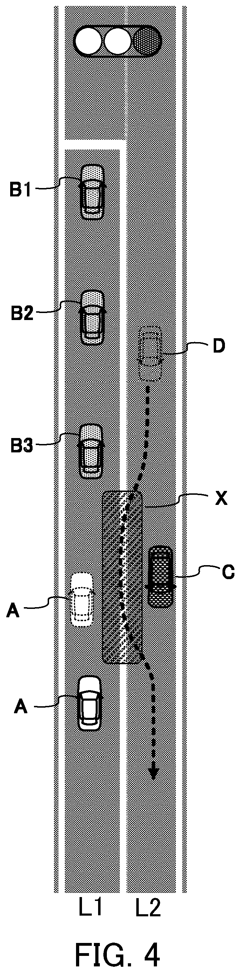

FIG. 4 is a diagram showing a situation around the host vehicle A in a case where travel assistance control according to the second embodiment is performed. In this figure, in a case where left-hand traffic is required by law or the like, two lanes of a travel lane L1 on a left side of the figure and an opposite lane L2 on a right side of the figure are shown, and a signal in front of the travel lane L1 is a stop display (red). The travel assistance control of the present embodiment is the same as the travel assistance control of the first embodiment shown in FIG. 3.

In the travel lane L1, the host vehicle A is traveling, and a plurality of preceding vehicles B1 to B3 have stopped and are forming a row before a stop line in front of the host vehicle A. In the opposite lane L2, a parked vehicle C is stopped at the right rear of the preceding vehicle B3 in the travel lane L1. Another vehicle D travels toward the parked vehicle C behind (an upper side of the figure) the parked vehicle C.

Here, a planned travel route of the other vehicle D is indicated by a dotted line, and the other vehicle D travels on an avoidance route that temporarily shifts to a side of the parked vehicle C in order to avoid the parked vehicle C. Specifically, the other vehicle D traveling in the opposite lane L2 enters the travel lane L1 beyond a center line behind the parked vehicle C, passes by the side of the parked vehicle C, and then returns to the opposite lane L2 again to continue traveling.

Therefore, in a case where the preceding vehicle B3 is in front of the host vehicle A and stop control is in progress, when the controller 180 detects the parked vehicle C in the opposite lane L2, the controller 180 predicts a travel route of the other vehicle D to avoid the parked vehicle C. Then, the controller 180 sets a travel range X in which the other vehicle D can travel alongside the parked vehicle C in the travel lane L1 of the host vehicle A, and performs travel assistance such that the host vehicle A does not stay in the travel range X. For example, in this figure, the travel route is changed such that the host vehicle A stops on a side opposite to the parked vehicle C with respect to the travel range X. In this way, it is possible to suppress the stopped host vehicle A from obstructing traveling of the other vehicle D traveling in the opposite lane L2.

As described above, even when the adjacent lane of the host vehicle A is the opposite lane L2 and the parked vehicle C in the opposite lane L2 is detected during the stop control of the host vehicle A, it is possible to suppress obstruction of the traveling of the other vehicle D traveling in the opposite lane L2 by executing a travel assistance method of the present embodiment.

According to the second embodiment, the following effects can be obtained.

According to the travel assistance method of the second embodiment, the travel range X is set on a side of the obstacle on the lane L1 side such that the other vehicle D traveling in the adjacent lane L2 which is the opposite lane can avoid the obstacle, and travel assistance information is changed such that the host vehicle A does not obstruct the traveling of the other vehicle D traveling in the adjacent lane L2 in the travel range X. More specifically, the host vehicle A is absent in the travel range X for a predetermined time or more, and the travel range X is empty on the side of the obstacle, thereby suppressing the host vehicle A from obstructing the traveling of the other vehicle D. As a result, it is possible to avoid occurrence of congestion due to the other vehicle D traveling toward the parked vehicle C.

### (Third Embodiment)

In the first or second embodiment, a case where the adjacent lane adjacent to the travel lane of the host vehicle A is a linear advancing lane has been described, but the present invention is not limited thereto. In the third embodiment, an example in which a T-shaped intersection connected to a side road is present in an adjacent lane of a travel lane of the host vehicle A will be described.

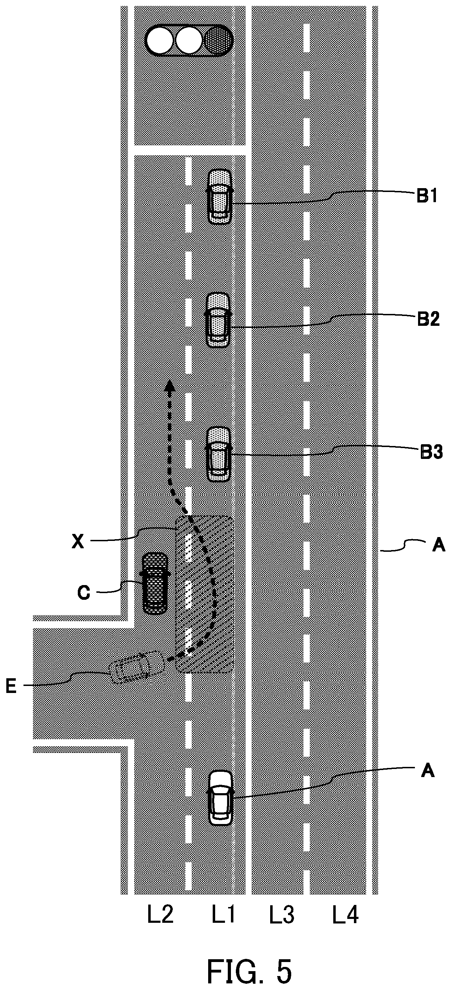

FIG. 5 is a diagram showing a situation around the host vehicle A in a case where travel assistance control according to the third embodiment is performed. In this figure, as compared with the situation around the host vehicle A of the first embodiment shown in FIG. 2, a T-shaped intersection intersecting with a side road is provided in a lane L2. A parked vehicle C is present in front of (an upper side of the figure) the T-shaped intersection. Opposite lanes L3 and L4 are shown on a right side of lanes L1 and L2.

At such a T-shaped intersection, another vehicle E that performs a lane change such that the other vehicle E turns to the left from the side road and enters the lane L2 is shown. In order to travel so as to turn around the parked vehicle C, the other vehicle E travels on a meandering route along which the other vehicle E temporarily enters the lane L2 beyond a center line and then returns to the lane L1 again. Therefore, when the controller 180 detects a side road forming T-shaped intersection and a parked vehicle in a vicinity of the side lode, the controller 180 sets, as a travel range X, a region that can be a travel route of the other vehicle E on a right side of the parked vehicle C on the lane L1 side, and changes the travel control information such that the host vehicle A does not stay in the travel range X. Even when the other vehicle E traveling on the side road is not detected, the controller 180 assumes the other vehicle E traveling from the side road, and sets the travel range X on the side of the parked vehicle C in order to prevent the host vehicle A from obstructing the other vehicle E.

Here, a range width and a range length of the travel range X in this example are larger than the range width and the range length of the first embodiment shown in FIG. 2. An avoidance route on which the other vehicle D avoids the parked vehicle C from the side road and travels in the adjacent lane L2 has a large turn as compared with the avoidance route on which the other vehicle D overtakes the parked vehicle C as shown in the first embodiment, and thus needs to be increased in a width direction. Further, since the other vehicle E makes a left turn instead of overtaking, a range length of the lane L2 in the front-rear direction becomes short. Therefore, when the parked vehicle C is present in the vicinity of the T-shaped intersection, by setting the range length to be short and the range width to be long, it is possible to suppress the host vehicle A from obstructing the traveling of the other vehicle D.

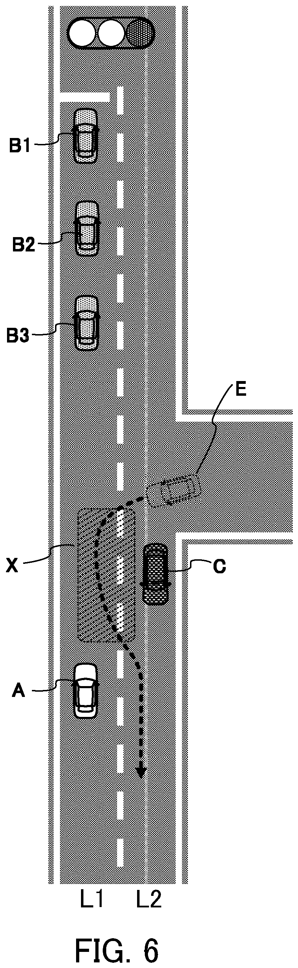

FIG. 6 is a diagram showing a situation around the host vehicle A in a case where travel assistance control according to another example is performed. In this figure, as compared with the situation around the host vehicle A of the second embodiment shown in FIG. 4, a T-shaped intersection intersecting with a side road is provided in an opposite lane L2. A parked vehicle C is present in front of (a lower side of the figure) the T-shaped intersection.

At such a T-shaped intersection, the other vehicle E that performs a lane change such that the other vehicle E turns left into the lane L2 from the side road and enters the lane L2 is shown. In order to travel so as to turn around the parked vehicle C, the other vehicle E travels on a route along which the other vehicle E temporarily enters the lane L1 beyond a center line and then returns to the lane L2 again. Therefore, the controller 180 sets, as a travel range X, a region that can be a travel route of the other vehicle D on a left side of the parked vehicle C, and changes travel control information such that the host vehicle A does not stay in the travel range X. In this way, it is possible to suppress the host vehicle A from obstructing the traveling of the other vehicle D on the side of the parked vehicle C. Similar to the example shown in FIG. 5, the travel range X in this example has a larger range width and a smaller range length than that of the travel range X in the second embodiment shown in FIG. 4.

In the examples of FIGS. 5 and 6, an example in which the T-shaped intersection is provided has been described, but the present invention is not limited thereto. For example, even when a parking lot is provided adjacent to the adjacent lane L2 and the parked vehicle C is present in a vicinity of an exit of the parking lot, it is possible to suppress the host vehicle A from obstructing the traveling of the other vehicle D on the side of the parked vehicle C by performing the travel assistance control of the present embodiment.

According to the third embodiment, the following effects can be obtained.

According to the travel assistance method of the third embodiment, the range length of the travel range X is smaller and the range width is larger as a distance from the side road into which the other vehicle D can enter to the obstacle is smaller. The avoidance route on which the other vehicle D avoids the parked vehicle C from the side road and travels in the adjacent lane L2 has a large turn as compared with the avoidance route on which the other vehicle D overtakes the parked vehicle C, and thus the avoidance route needs to be increased in the width direction, while the range length is shortened. Therefore, even if the range length is shortened, it is possible to suppress the host vehicle A from obstructing the traveling of the other vehicle D by widening the range width.

### (Fourth Embodiment)

In the first and second embodiments, the travel assistance method in the case where the parked vehicle C is detected in the adjacent lane adjacent to the travel lane of the host vehicle A has been described. In the travel assistance method, the travel range X is set even when the other vehicle D traveling from the rear toward the parked vehicle C is not detected, but the present invention is not limited thereto. In the fourth embodiment, travel assistance control in a case where the other vehicle D traveling toward an obstacle in an adjacent lane is actually detected will be described.

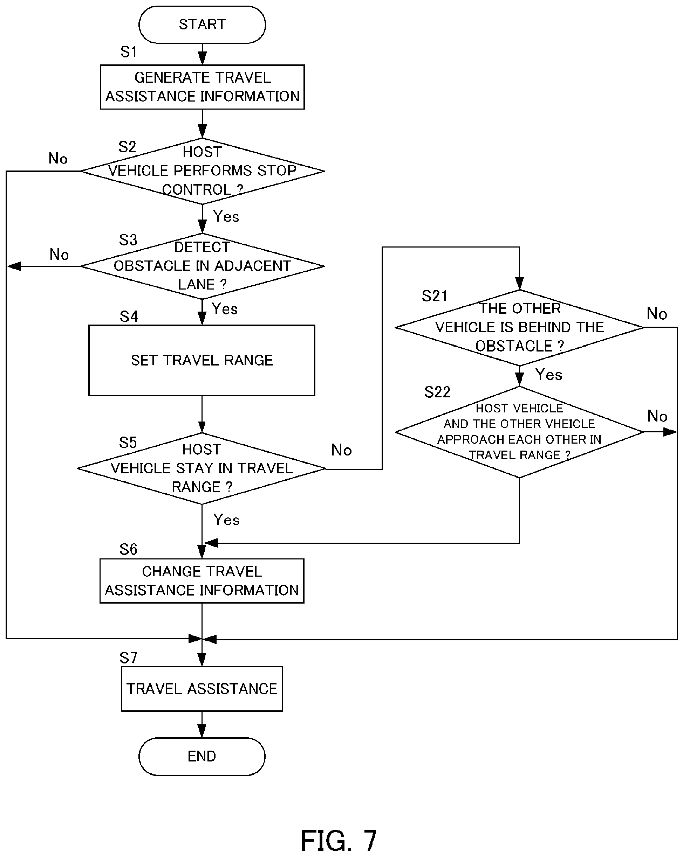

FIG. 7 is a flowchart of the travel assistance control according to the fourth embodiment. As compared with the flowchart of the first embodiment shown in FIG. 3, in the flowchart shown in this figure, processing of steps S21 and S22 is further added after it is not determined in step S5 that the host vehicle A stays and stops in a travel range X (S5: No).

In step S21, the controller 180 determines whether the other vehicle D that actually travels toward the obstacle in the adjacent lane is detected. When the other vehicle D traveling toward the obstacle is detected behind the obstacle (S21: Yes), in order to further perform travel assistance corresponding to the other vehicle D, the processing of step S22 is performed next. On the other hand, when the other vehicle D traveling toward the obstacle is not detected (S21: No), processing of step S7 is performed next.

In step S22, the controller 180 estimates travel routes of the host vehicle A and the other vehicle D, and estimates a distance between the host vehicle A and the other vehicle D at any time based on the estimated travel routes. Then, the controller 180 determines whether the host vehicle A and the other vehicle D are present at substantially the same timing in the travel range X and approach each other within a predetermined distance. When the host vehicle A and the other vehicle D approach each other within the predetermined distance in the travel range X (S22: Yes), processing of step S6 is performed next in order to change travel assistance information such that the host vehicle A and the other vehicle D do not approach each other. On the other hand, when the host vehicle A and the other vehicle D do not approach each other (S22: No), the processing of step S7 is performed next. In this way, the fact that the host vehicle A and the other vehicle D approach each other in the travel range X may be referred to as "interfere".

In such control, even when the other vehicle D traveling toward the obstacle is not detected, the host vehicle A is suppressed from staying in the travel range X (S5: No). On the other hand, when the other vehicle D is detected (S21: Yes), the host vehicle A and the other vehicle D are further suppressed from approaching each other in the travel range X (S22: Yes), and thus it is possible to suppress the host vehicle A from obstructing the traveling of the other vehicle D.

In the present embodiment, it is assumed that stop control is performed (S2: Yes), and when the other vehicle D is detected (S21: Yes), it is further determined whether the host vehicle A and the other vehicle D approach each other in the travel range X (S22), but the present invention is not limited thereto. Processing of determining whether the stop control shown in step S2 is performed may be omitted. That is, even when the stop control is not being performed and the host vehicle A and the other vehicle D approach each other in the travel range X (S22: Yes), it is possible to suppress the host vehicle A from obstructing the traveling of the other vehicle D by controlling both vehicles not to approach each other.

In the processing of step S6, the controller 180 (the situation determination unit 185) changes the travel assistance information such that the host vehicle A is absent in the travel range X for a predetermined time or more. Here, in step S22, when it is determined that the host vehicle A and the other vehicle D approach each other in the travel range X, it is possible to suppress both vehicles from approaching each other in the travel range X by changing only a vehicle speed. Therefore, it is unnecessary to change a travel route, and thus it is possible to suppress occurrence of acceleration in a left-right direction. Note that the travel route may be changed instead of the speed, or the travel route may be changed in addition to the speed, and thus both vehicles are suppressed from approaching each other in the travel range X.

According to the fourth embodiment, the following effects can be obtained.

According to the travel assistance method of the fourth embodiment, when the other vehicle D traveling toward the obstacle is present behind the obstacle, it is further determined whether the host vehicle A and the other vehicle D approach each other by a predetermined distance or less in the travel range X (S21). When both vehicles approach each other within the predetermined distance (S21: Yes), the travel assistance information is changed such that both vehicles do not approach each other within the predetermined distance in the travel range X. In this way, regardless of presence or absence of the other vehicle D traveling toward the obstacle, it is possible to prevent the host vehicle A from staying in the travel range X (S5: Yes), and when the other vehicle D is actually traveling toward the obstacle, it is possible to suppress the host vehicle A and the other vehicle D from approaching each other, and thus it is possible to further suppress the host vehicle A from obstructing the other vehicle D.

According to the travel assistance method of the fourth embodiment, when the travel assistance information is changed such that the host vehicle A is absent in the travel range X for the predetermined time or more, it is possible to suppress both vehicles from approaching each other in the travel range X by changing only the vehicle speed, and it is unnecessary to change the travel route, and thus it is possible to suppress the occurrence of acceleration in the left-right direction. By changing the travel route instead of the speed, it is possible to suppress the occurrence of acceleration in the front-rear direction. By changing both the speed and the travel route, it is possible to improve driving performance of the host vehicle A without limiting control parameters for the host vehicle A.

### (Fifth Embodiment)

In the first to fourth embodiments, the example in which the travel assistance information is changed when the host vehicle A stays in the travel range X has been described. In the fifth embodiment, an example in which a travel route or speed information in the travel assistance information is changed will be described in detail.

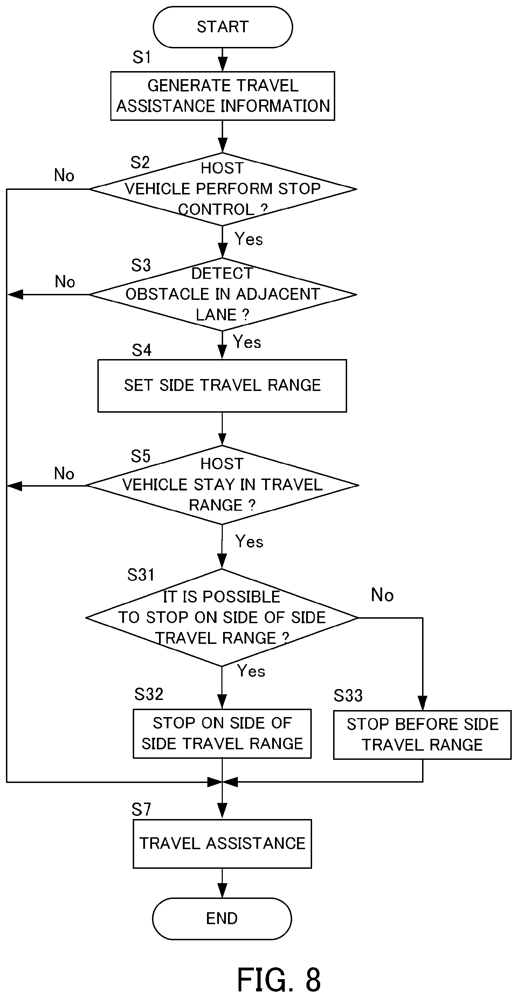

FIG. 8 is a flowchart of travel assistance control according to the fifth embodiment. As compared with the flowchart of the first embodiment shown in FIG. 3, in the flowchart shown in this figure, processing of steps S31 to S33 are further added after it is determined in step S5 that the host vehicle A stays and stops in a travel range X (S5: Yes).

In step S31, the controller 180 further determines whether the host vehicle A can be stopped on a side of the travel range X in the lane L1. When the host vehicle A can be stopped on the side of the travel range X on the lane L1 side (S31: Yes), processing of step S32 is performed next. On the other hand, when the host vehicle A cannot be stopped on the side of the travel range X (S31: No), processing of step S33 is performed next.

In step S32, the controller 180 changes a travel route and speed information so as to stop the host vehicle A on the side of the travel range X in the lane L1.

In step S33, the controller 180 changes the speed information so as to stop the host vehicle A before the travel range X without changing the travel route.

In this way, it is possible to change at least one of the travel route and the speed information according to the travel range X occupying the lane L1. As a result, when the host vehicle A is stopped on the side of the travel range X, it is possible to reduce congestion in the lane L1. On the other hand, in a case where the host vehicle A is stopped before the travel range X, even when a width of the lane L1 is small, the host vehicle A is suppressed from obstructing the avoidance route of the other vehicle D. In this way, since the stop position of the host vehicle A is changed according to a road situation, it is possible to increase a degree of freedom of control and to reduce congestion.

According to the fifth embodiment, the following effects can be obtained.

According to the travel assistance method of the fifth embodiment, when the host vehicle A stays in the travel range X (S5: Yes), it is further determined whether the host vehicle A can stop on the side of the travel range X (S31). When the host vehicle A can stop on the side of the travel range X (S31: Yes), the route and the speed are changed such that the host vehicle A stops on the side of the travel range X (S32). When the host vehicle A can stop on the side of the travel range X (S31: Yes), the route and the speed are changed such that the host vehicle A stops before the travel range X (S33).

By performing such control, when the host vehicle A is parked before the travel range X, the host vehicle A does not obstruct the traveling of the other vehicle D in the travel range X. Further, when the host vehicle A is parked on the side of the travel range X (S32), the host vehicle A is located further forward and does not obstruct the traveling of the other vehicle D in the travel range X, and thus it is possible to suppress the occurrence of congestion in the travel lane L1. In this way, it is possible to suppress the host vehicle A from obstructing the traveling of the other vehicle D according to a road state.

### (Sixth Embodiment)

In the first to fifth embodiments, the example in which the travel assistance information of the host vehicle A is changed when an obstacle is detected in the adjacent lane has been described. In the sixth embodiment, an example in which the travel assistance information of the host vehicle A is not changed will be described.

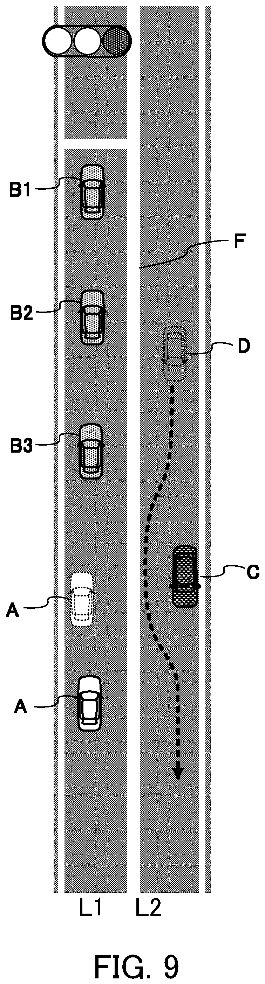

FIG. 9 is a diagram showing a situation around the host vehicle A in a case where travel assistance control according to the sixth embodiment is performed. In this figure, similar to the example of the second embodiment shown in FIG. 4, a lane L1 extending from a lower side to an upper side in the figure and a lane L2 extending from the upper side to the lower side in the figure are provided. In the present embodiment, it is assumed that a median strip F is further provided between the lane L1 and the lane L2.

The other vehicle D travels on an avoidance route of the parked vehicle C, but the avoidance route does not enter the travel lane L1 of the host vehicle A because the median strip F is provided. Therefore, even if the host vehicle A is parked on a side of the parked vehicle C via the median strip F, the host vehicle A does not obstruct traveling of the other vehicle D.

According to a control method of the sixth embodiment, a processing load of the travel assistance control can be reduced by changing the travel assistance information only when the median strip F is not detected by the surrounding vehicle information acquisition unit 183, in other words, only when the median strip F is not detected.

Although the embodiments of the present invention have been described above, the above embodiments are merely a part of application examples of the present invention, and are not intend to limit the technical scope of the present invention, as defined by the appended claims, to the specific configurations of the above embodiments.

Each of the embodiments described above has been described as a single embodiment, but may be appropriately combined, according to the appended claims.

## Claims

1. A travel assistance method comprising:
detecting an obstacle (C) in an adjacent lane (L2) of a travel lane (L1) in which the host vehicle travels;
setting a travel range (X) on a side of the obstacle (C) on the host vehicle side when the obstacle (C) is detected;
setting at least one of route and vehicle speed such that the host vehicle does not obstruct advancing of another vehicle (D) traveling in the adjacent lane (L2) toward the obstacle (C) in the travel range (X); and
executing travel assistance using the set route and/or vehicle speed,
wherein
the method further comprises:
determining whether the host vehicle performs stop control toward the travel range (X); and
setting the route and/or vehicle speed such that the host vehicle stops on a side of the travel range (X), or such that the host vehicle stops before or in front of the travel range (X), when the host vehicle performs the stop control
**characterized by** detecting presence or absence of a median strip between the travel lane (L1) of the host vehicle and the adjacent lane (L2) in which the obstacle (C) is detected; and
setting the route and/or
the vehicle speed only when the median strip is not detected.

2. The travel assistance method according to claim 1, further comprising:
setting the route and the vehicle speed such that the host vehicle does not stop in the travel range (X) when the host vehicle performs deceleration control toward the travel range (X); and
executing the travel assistance using the set route and vehicle speed.

3. The travel assistance method according to claim 2, further comprising:
determining whether the host vehicle is able to stop on a side of the travel range (X) in the travel lane (L1) when the host vehicle stops after deceleration;
setting the route and the vehicle speed such that the host vehicle stops on a side of the travel range (X) when the host vehicle is able to stop on the side of the travel range (X); and
setting the route and the vehicle speed such that the host vehicle stops before or in front of the travel range (X) when the host vehicle is not able to stop on the side of the travel range (X).

4. The travel assistance method according to claim 1, further comprising:
determining whether the host vehicle and the other vehicle approach each other by a threshold distance or less in a vehicle width direction in the travel range (X) when the other vehicle traveling in the adjacent lane (L2) toward the obstacle (C) is detected; and
setting the vehicle speed such that the host vehicle and the other vehicle do not approach each other by the threshold distance or less when the host vehicle and the other vehicle approach each other by the threshold distance or less.

5. The travel assistance method according to claim 4, further comprising:
setting the route in addition to the vehicle speed such that the host vehicle and the other vehicle do not approach each other by the threshold distance or less when the host vehicle and the other vehicle approach each other by the threshold distance or less.

6. The travel assistance method according to any one of claims 1 to 5, wherein
the travel range (X) is set to be larger as a speed of the other vehicle is higher.

7. The travel assistance method according to any one of claims 1 to 6, wherein
a range width of the travel range (X) in a vehicle width direction is set to be smaller as vehicle widths of the travel lane (L1) and the adjacent lane (L2) are smaller.

8. The travel assistance method according to any one of claims 1 to 7, wherein
the travel range (X) is set to be larger as the obstacle (C) is larger.

9. The travel assistance method according to any one of claims 1 to 8, wherein
the adjacent lane (L2) crosses a side road, and
a range length of the travel range (X) in a front-rear direction is set to be larger and the range width of the travel range (X) in the vehicle width direction is set to be smaller, as a distance from the obstacle (C) to the side road is smaller.

10. A travel assistance device (100) comprising:
a sensor configured to
detect an obstacle (C) in an adjacent lane (L2) of a travel lane (L1) in which the host vehicle travels;
and a controller configured to:
set a travel range (X) on a side of the obstacle (C) on the host vehicle side when the obstacle (C) is detected;
set at least one of route and vehicle speed such that the host vehicle does not obstruct advancing of another vehicle (D) travelling in the adjacent lane (L2) toward the obstacle (C) in the travel range (X); and
execute travel assistance using the set route and/or vehicle speed, wherein
the controller is further configured to:
determine whether the host vehicle performs stop control toward the travel range (X); and
set the route and/or vehicle speed such that the host vehicle stops on a side of the travel range (X), or such that the host vehicle stops before or in front of the travel range (X), when the host vehicle performs the stop control;
**characterized by** the controller being configured to :
detect presence or absence of a
median strip between the travel lane (L1) of the host vehicle and the adjacent lane (L2) in which the obstacle (C) is detected; and
set the route and/or
the vehicle speed only when the median strip is not detected.

## Patentansprüche

1. Ein Fahrassistenzverfahren weist auf:
Erfassen eines Hindernisses (C) in einer benachbarten Spur (L2) einer Fahrspur (L1), in der das Hostfahrzeug fährt;
Einstellen eines Fahrtbereichs (X) auf einer Seite des Hindernisses (C) auf der Seite des Wirtsfahrzeugs, wenn das Hindernis (C) erkannt wird;
Einstellen mindestens einer der Größen Route und Fahrgeschwindigkeit, so dass das Hostfahrzeug das Vorankommen eines anderen Fahrzeugs (D), das auf der benachbarten Fahrspur (L2) in Richtung des Hindernisses (C) fährt, im Fahrtbereich (X) nicht behindert; und
Ausführen einer Fahrunterstützung unter Verwendung der eingestellten Route und/oder Fahrgeschwindigkeit,
wobei
das Verfahren weiterhin aufweist:
Bestimmen, ob das Hostfahrzeug eine Stoppsteuerung in Richtung des Fahrtbereichs (X) durchführt; und
Einstellen der Route und/oder der Fahrzeuggeschwindigkeit derart, dass das Hostfahrzeug auf einer Seite des Fahrtbereichs (X) anhält, oder derart, dass das Hostfahrzeug vor oder vor dem Fahrtbereich (X) anhält, wenn das Hostfahrzeug die Stoppsteuerung durchführt
**gekennzeichnet durch** Erfassen des Vorhandenseins oder Nichtvorhandenseins eines Mittelstreifens zwischen der Fahrspur (L1) des Hostfahrzeugs und der benachbarten Fahrspur (L2), in der das Hindernis (C) erfasst wird; und
Festlegen der Route und/oder der Fahrzeuggeschwindigkeit nur dann, wenn der Mittelstreifen nicht erfasst wird.

2. Das Fahrassistenzverfahren nach Anspruch 1, das ferner aufweist:
Festlegen der Route und der Fahrgeschwindigkeit, so dass das Hostfahrzeug nicht im Fahrtbereich (X) anhält, wenn das Hostfahrzeug eine Verzögerungssteuerung in Richtung des Fahrtbereichs (X) durchführt; und
Ausführen der Fahrunterstützung unter Verwendung der eingestellten Route und Fahrgeschwindigkeit.

3. Das Fahrassistenzverfahren nach Anspruch 2, das weiterhin aufweist:
Bestimmungsvorrichtung, ob das Hostfahrzeug in der Lage ist, auf einer Seite des Fahrtbereichs (X) in der Fahrspur (L1) anzuhalten, wenn das Hostfahrzeug nach der Verzögerung anhält;
Einstellen der Route und der Fahrgeschwindigkeit derart, dass das Hostfahrzeug auf einer Seite des Fahrtbereichs (X) anhält, wenn das Hostfahrzeug in der Lage ist, auf der Seite des Fahrtbereichs (X) anzuhalten; und
Festlegen der Route und der Fahrgeschwindigkeit, so dass das Hostfahrzeug vor oder vor dem Fahrtbereich (X) anhält, wenn das Hostfahrzeug nicht in der Lage ist, auf der Seite des Fahrtbereichs (X) anzuhalten.

4. Das Fahrassistenzverfahren nach Anspruch 1, das weiterhin aufweist:
Bestimmungsvorrichtung, ob sich das Hostfahrzeug und das andere Fahrzeug um einen Schwellenabstand oder weniger in einer Fahrzeugbreitenrichtung im Fahrtbereich (X) nähern, wenn das andere Fahrzeug, das auf der benachbarten Spur (L2) in Richtung auf das Hindernis (C) fährt, erfasst wird; und
Einstellen der Fahrzeuggeschwindigkeit derart, dass sich das Hostfahrzeug und das andere Fahrzeug nicht um den Schwellenabstand oder weniger nähern, wenn sich das Hostfahrzeug und das andere Fahrzeug um den Schwellenabstand oder weniger nähern.

5. Das Fahrassistenzverfahren nach Anspruch 4, das ferner aufweist:
Festlegen der Route zusätzlich zur Fahrzeuggeschwindigkeit, so dass sich das Hostfahrzeug und das andere Fahrzeug nicht bis zum Schwellenwert oder weniger nähern, wenn sich das Hostfahrzeug und das andere Fahrzeug bis zum Schwellenwert oder weniger nähern.

6. Das Fahrassistenzverfahren nach einem der Ansprüche 1 bis 5, bei dem der Fahrtbereich (X) größer eingestellt wird, wenn eine Geschwindigkeit des anderen Fahrzeugs höher ist.

7. Das Fahrassistenzverfahren nach einem der Ansprüche 1 bis 6, wobei
eine Bereichsbreite des Fahrtbereichs (X) in einer Fahrzeugbreitenrichtung kleiner eingestellt wird, wenn Fahrzeugbreiten der Fahrspur (L1) und der Nachbarspur (L2) kleiner sind.

8. Das Fahrassistenzverfahren nach einem der Ansprüche 1 bis 7, wobei
der Fahrtbereich (X) größer eingestellt wird, wenn das Hindernis (C) größer ist.

9. Das Fahrassistenzverfahren nach einem der Ansprüche 1 bis 8, bei dem
die Nachbarspur (L2) eine Nebenstraße kreuzt, und
eine Bereichslänge des Fahrtbereichs (X) in Vorder-Hinter-Richtung größer und die Bereichsbreite des Fahrtbereichs (X) in Fahrzeugbreitenrichtung kleiner eingestellt wird, wenn ein Abstand vom Hindernis (C) zur Nebenstraße kleiner wird.

10. Eine Fahrassistenzvorrichtung (100) aufweisend:
einen Sensor, der konfiguriert ist, um:
ein Hindernis (C) in einer benachbarten Fahrspur (L2) einer Fahrspur (L1), in der das Hostfahrzeug fährt, zu erfassen
und eine Steuereinheit, die konfiguriert ist, zum:
Einstellen eines Fahrtbereichs (X) auf einer Seite des Hindernisses (C) auf der Seite des Hostfahrzeugs, wenn das Hindernis (C) erkannt wird;
Einstellen mindestens einer der Komponenten Route und Fahrgeschwindigkeit, so dass das Hostfahrzeug das Vorankommen eines anderen Fahrzeugs (D), das auf der benachbarten Spur (L2) in Richtung des Hindernisses (C) fährt, in dem Fahrtbereich (X) nicht behindert; und
Ausführen einer Fahrunterstützung unter Verwendung der eingestellten Route und/oder Fahrgeschwindigkeit, wobei
die Steuereinheit weiter konfiguriert ist, um:
zu bestimmen, ob das Hostfahrzeug eine Stoppsteuerung in Richtung des Fahrtbereichs (X) durchführt; und
die Route und/oder die Fahrzeuggeschwindigkeit so einzustellen, dass das Hostfahrzeug auf einer Seite des Fahrtbereichs (X) anhält, oder so, dass das Hostfahrzeug vor oder vor dem Fahrtbereich (X) anhält, wenn das Hostfahrzeug die Stoppsteuerung durchführt;
**dadurch gekennzeichnet, dass** die Steuereinheit konfiguriert ist, um: das Vorhandensein oder Nichtvorhandensein eines Mittelstreifens zwischen der Fahrspur (L1) des Hostfahrzeugs und der benachbarten Fahrspur (L2), in der das Hindernis (C) erkannt wird, zu erkennen; und
die Route und/oder die Fahrzeuggeschwindigkeit nur dann einzustellen, wenn der Mittelstreifen nicht erkannt wird.

## Revendications

1. Procédé d'assistance au déplacement, comprenant :
la détection d'un obstacle (C) dans une voie adjacente (L2) à une voie de circulation (L1) dans laquelle circule le véhicule hôte ;
la définition d'une plage de déplacement (X) d'un côté de l'obstacle (C) du côté du véhicule hôte quand l'obstacle (C) est détecté ;
la définition d'au moins un paramètre parmi l'itinéraire et la vitesse du véhicule de telle sorte que le véhicule hôte ne gêne pas l'avancement d'un autre véhicule (D) circulant dans la voie adjacente (L2) vers l'obstacle (C) dans la plage de déplacement (X) ; et
l'exécution d'une assistance au déplacement en utilisant l'itinéraire défini et/ou la vitesse définie du véhicule,
dans lequel le procédé comprend en outre :
la détermination du fait que le véhicule hôte effectue ou non un contrôle d'arrêt vers la plage de déplacement (X) ; et
la définition de l'itinéraire et/ou de la vitesse du véhicule de telle sorte que le véhicule hôte s'arrête d'un côté de la plage de déplacement (X), ou de telle sorte que le véhicule hôte s'arrête avant ou devant la plage de déplacement (X), quand le véhicule hôte effectue le contrôle d'arrêt,
**caractérisé par**
la détection de la présence ou de l'absence d'une bande médiane entre la voie de circulation (L1) du véhicule hôte et la voie adjacente (L2) dans laquelle l'obstacle (C) est détecté ; et
la définition de l'itinéraire et/ou de la vitesse du véhicule uniquement quand la bande médiane n'est pas détectée.

2. Procédé d'assistance au déplacement selon la revendication 1, comprenant en outre :
la définition de l'itinéraire et de la vitesse du véhicule de telle sorte que le véhicule hôte ne s'arrête pas dans la plage de déplacement (X) quand le véhicule hôte effectue un contrôle de décélération vers la plage de déplacement (X) ; et
l'exécution de l'assistance au déplacement en utilisant l'itinéraire défini et la vitesse définie du véhicule.

3. Procédé d'assistance au déplacement selon la revendication 2, comprenant en outre :
la détermination du fait que le véhicule hôte est capable ou non de s'arrêter d'un côté de la plage de déplacement (X) dans la voie de circulation (L1) quand le véhicule hôte s'arrête après une décélération ;
la définition de l'itinéraire et de la vitesse du véhicule de telle sorte que le véhicule hôte s'arrête d'un côté de la plage de déplacement (X) quand le véhicule hôte est capable de s'arrêter du côté de la plage de déplacement (X) ; et
la définition de l'itinéraire et de la vitesse du véhicule de telle sorte que le véhicule hôte s'arrête avant ou devant la plage de déplacement (X) quand le véhicule hôte n'est pas capable de s'arrêter sur le côté de la plage de déplacement (X).

4. Procédé d'assistance au déplacement selon la revendication 1, comprenant en outre :
la détermination du fait que le véhicule hôte et l'autre véhicule se rapprochent ou non l'un de l'autre à une distance inférieure ou égale à une distance seuil en direction de la largeur du véhicule dans la plage de déplacement (X) quand l'autre véhicule circulant dans la voie adjacente (L2) vers l'obstacle (C) est détecté ; et
la définition de la vitesse du véhicule de telle sorte que le véhicule hôte et l'autre véhicule ne se rapprochent pas l'un de l'autre à une distance inférieure ou égale à la distance seuil quand le véhicule hôte et l'autre véhicule se rapprochent l'un de l'autre à une distance inférieure ou égale à la distance seuil.

5. Procédé d'assistance au déplacement selon la revendication 4, comprenant en outre :
la définition de l'itinéraire en plus de la vitesse du véhicule de telle sorte que le véhicule hôte et l'autre véhicule ne se rapprochent pas l'un de l'autre à une distance inférieure ou égale à la distance seuil quand le véhicule hôte et l'autre véhicule se rapprochent l'un de l'autre à une distance inférieure ou égale à la distance seuil.

6. Procédé d'assistance au déplacement selon l'une quelconque des revendications 1 à 5, dans lequel
la plage de déplacement (X) est définie de manière à être plus grande quand la vitesse de l'autre véhicule est plus élevée.

7. Procédé d'assistance au déplacement selon l'une quelconque des revendications 1 à 6, dans lequel
la largeur de la plage de déplacement (X) en direction de la largeur du véhicule est définie de manière à être plus petite quand les largeurs des véhicules présents dans la voie de circulation (L1) et dans la voie adjacente (L2) sont plus petites.

8. Procédé d'assistance au déplacement selon l'une quelconque des revendications 1 à 7, dans lequel
la plage de déplacement (X) est définie de manière à être plus grande quand l'obstacle (C) est plus grand.

9. Procédé d'assistance au déplacement selon l'une quelconque des revendications 1 à 8, dans lequel
la voie adjacente (L2) intersecte une route secondaire, et
la longueur de la plage de déplacement (X) en direction avant-arrière est définie de manière à être plus grande, et la largeur de la plage de déplacement (X) en direction de la largeur du véhicule est définie de manière à être plus petite, quand la distance entre l'obstacle (C) et la route secondaire est plus petite.

10. Dispositif d'assistance au déplacement (100) comprenant :
un capteur configuré pour détecter un obstacle (C) dans une voie adjacente (L2) à une voie de circulation (L1) dans laquelle se déplace le véhicule hôte ; et
un contrôleur configuré pour :
définir une plage de déplacement (X) d'un côté de l'obstacle (C) du côté du véhicule hôte quand l'obstacle (C) est détecté ;
définir au moins un paramètre parmi l'itinéraire et la vitesse du véhicule de telle sorte que le véhicule hôte ne gêne pas l'avancement d'un autre véhicule (D) circulant dans la voie adjacente (L2) vers l'obstacle (C) dans la plage de déplacement (X) ; et
exécuter une assistance au déplacement en utilisant l'itinéraire défini et/ou la vitesse définie du véhicule, dans lequel
le contrôleur est en outre configuré pour :
déterminer si le véhicule hôte effectue ou non un contrôle d'arrêt vers la plage de déplacement (X) ; et
définir l'itinéraire et/ou la vitesse du véhicule de telle sorte que le véhicule hôte s'arrête d'un côté de la plage de déplacement (X), ou de telle sorte que le véhicule hôte s'arrête avant ou devant la plage de déplacement (X), quand le véhicule hôte effectue le contrôle d'arrêt ;
**caractérisé par le fait que** le contrôleur est configuré pour :
détecter la présence ou l'absence d'une bande médiane entre la voie de circulation (L1) du véhicule hôte et la voie adjacente (L2) dans laquelle l'obstacle (C) est détecté ; et
définir l'itinéraire et/ou la vitesse du véhicule uniquement quand la bande médiane n'est pas détectée.
